# EUROPEAN PATENT APPLICATION

(11) **EP 1 276 299 A2**
(43) Date of publication of application: **15.01.2003**
(21) Application number: 02014986.0
(22) Date of filing: 09.07.2002
(51) Int. Cl.: H04M 1/02, H04M 1/725

(54) **Portable information terminal**

(30) Priority: 12.07.2001 JP 2001211522
(71) Applicant: Kabushiki Kaisha Toshiba, Tokyo (JP)
(72) Inventor: Shinoki, Yukitaka, Intellectual Property Division, Tokyo 105-8001 (JP)
(74) Representative: Henkel, Feiler, Hänzel

(57) **Abstract**

A portable information terminal comprises a body having a front face provided with an input section, and a back face provided opposed to the front face, and a wireless communication module slot provided away from the back face of the body and permitting detachable mounting of a wireless communication module with a wireless communication function.

## Description

The present invention relates to a portable information terminal having a slot for detachable mounting of a wireless module.

A portable information terminal has a slot for mounting of a wireless module (hereinafter referred to as "wireless module slot"). The wireless module is mounted to the wireless module slot. The radio communication function of the wireless module enables radio communication with the outside. The wireless module has a casing whose physical shape is a standard IC card shape. The wireless module has an antenna for radio communication. Jpn. Pat. Appln. KOKAI Publication No. 9-83538, for instance, proposes an IC card-shaped wireless module with an antenna.

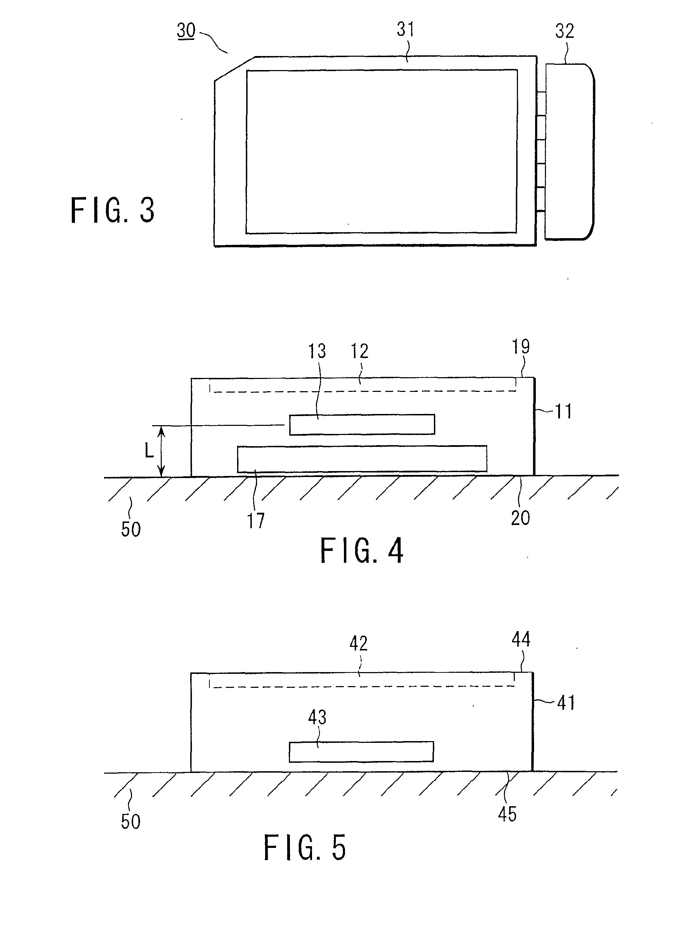

The location of the wireless module slot of the portable information terminal is determined, presupposing radio communication by means of the wireless module in the state in which the portable information terminal is held by the operator's hand. Specifically, as shown in FIG. 5, in a conventional information terminal, a wireless module slot 43 is located near a back face 45 of a body 41. In the state in which the portable information terminal is held by the operator, the radio wave transmission/reception efficiency is good since there is no obstacle in the vicinity of the wireless module mounted in the wireless module slot 43.

There is a case, however, where the portable information terminal is used while it is placed on a table 50, as shown in FIG. 5. In this case, the portable information terminal is placed on the table 50 such that an input face 44 thereof is directed upward. Accordingly, the back face 45, in the vicinity of which the wireless module slot 43 is provided, is opposed to the table 50. As a result, the wireless module mounted in the wireless module slot 43 is located close to the table 50. Where the table 50 is formed of a dielectric material or metal, it absorbs or reflects radio waves, causing a problem with radio wave
transmission/reception by the wireless module and degrading the transmission/reception efficiency.

The object of the invention is to provide a portable information terminal capable of suppressing degradation in radio wave transmission/reception efficiency of a wireless module.

According to an embodiment of the present invention, there is provided a portable information terminal comprising: a body having a front face provided with an input section, and a back face provided opposed to the front face; and a wireless communication module slot provided away from the back face of the body and permitting detachable mounting of a wireless communication module with a wireless communication function.

Thus, according to the portable information terminal of this invention, a degradation in radio wave transmission/reception efficiency of the wireless module can be suppressed.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external structure of a portable information terminal according to an embodiment of the present invention, as viewed from an input face side thereof;
FIG. 2 shows an external structure of the portable information terminal according to the embodiment, as viewed from a top side thereof;
FIG. 3 shows an external structure of a radio module;
FIG. 4 shows the portable information terminal according to the embodiment, which is placed on a table with its input face being directed upward; and
FIG. 5 shows a conventional portable information terminal, which is placed on a table with its input face being directed upward.

An embodiment of the present invention will now be described with reference to the accompanying drawings.

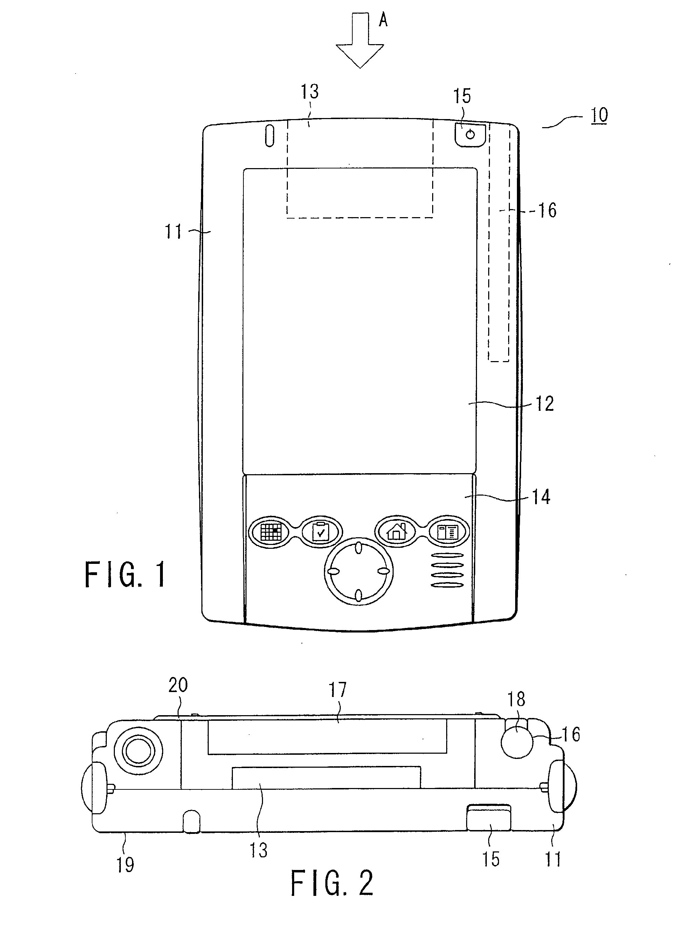

FIG. 1 shows an external structure of a portable information terminal 10 according to an embodiment of the present invention, as viewed from an input face side thereof. FIG. 2 shows an external structure of the portable information terminal shown in FIG. 1, as viewed in a direction A in FIG. 1, that is, as viewed from a top side thereof.

As is shown in FIGS. 1 and 2, the portable information terminal 10 comprises a body 11, a display/tablet section 12 provided on the body 11, a wireless module slot 13, a button operation section 14, a power button 15, a stylus pen storage section 16, and a card slot 17.

As is shown in FIG. 2, the body 11 has an input face 19 with an input section for data input, and a back face 20 that is opposed to the input face 19. The input section provided on the input face 19 includes the display/tablet section 12 and the button operation section 14.

In the display/tablet section 12, a display section for displaying information and a tablet section for inputting position information by means of a stylus pen 18 are integrally formed. In the tablet section of the display/tablet section 12, a position on the tablet face is designated by the stylus pen 18 and associated position information is input. Thus, data indicated by the input position information is input. The display section comprises, e.g. a liquid crystal display (LCD). The tablet section comprises, e.g. a pressure-sensitive tablet.

The wireless module slot 13 is a slot for detachable mounting of a wireless module having a casing with a physical shape of an IC card. The wireless module slot 13 contains an interface section for interface with the wireless module. As is shown in FIG. 2, in this embodiment, the wireless module slot 13 is located at an upper end surface of the body 11, away from the back face 20 of body 11. Specifically, the opening of the wireless module slot 13, through which the wireless module is inserted, is formed at an upper end surface of the body 11, and a space for receiving the wireless module is defined within the casing.

As is shown in FIG. 2, the portable information terminal 10 is provided with the card slot 17 to which an IC memory card and I/O card is detachably mounted, in addition to the wireless module slot 13. Since the card slot 17 is provided near the back face 20 of body 11, the wireless module slot 13 is positioned away from the back face 20 so as to keep at least a space for mounting of the card slot 17.

The button operation section 14 has a plurality of operation buttons. The buttons are used to input instruction information to the portable information terminal 10 for instructing execution of a predetermined process, or to input data. The power button 15 is depressed to turn on/off power. The stylus pen storage section 16 receives the stylus pen 17.

The card slot 17 is a slot for detachable mounting of an IC memory card or an I/O card. The slot 17 contains an interface section for interface with an IC memory card or an I/O card. The IC memory card incorporates a semiconductor memory and stores data. The casing of the IC memory card has a physical shape of an IC card. The I/O card is a modem card for personal computer communication, or a LAN card. The I/O card has a physical shape of an IC card. The card slot 17 is located near the back face 20 of body 11 and at an upper end surface of the body 11 along with the wireless module slot 13.

In the portable information terminal 10, the wireless module slot 13 is located away from the back face 20. Accordingly, the card slot 17 lies between the wireless module slot 13 and back face 20.

FIG. 3 shows an external structure of the wireless module. As is shown in FIG. 3, a wireless module 30 comprises an IC card 31 and an antenna module 32 containing an antenna. The wireless module 30 is mounted such that a part of the IC card 31 is inserted in the wireless module slot 13 of portable information terminal 10. Thus, when the wireless module has been mounted in the wireless module slot 13, the antenna module 32 is located at substantially the same position as the slot opening of the wireless module slot 13.

For example, an SD (secured digital) card is used as the IC card 31. On the other hand, a CF (compact flash) card, for instance, is used as the IC memory card or I/O card to be mounted in the card slot 17.

The wireless module 30 has a function of performing radio communication using a wireless communication system of wireless LAN or Bluetooth. Bluetooth is a short-distance wireless communication standard. Bluetooth uses a frequency band of 2.4 GHz and realizes radio communication within a range of, e.g. 10 m.

FIG. 4 shows the portable information terminal 10 (as viewed from the upper part of the body 11) which is placed on the table 50 with its input face 19 situated upward and its back face 20 downward. The portable information terminal 10 shown in FIG. 4 is identical to that shown in FIGS. 1 and 2. The corresponding structural elements are denoted by like reference numerals, and a description thereof is omitted. The table 50 is one for mounting of the portable information terminal 10. The table 50 is formed of, e.g. a dielectric material or metal.

As is shown in FIG. 4, as regards the portable information terminal 10 according to this embodiment, the wireless module slot 13 is located away from the back face 20. Thus, even when the portable information terminal 10 is placed on the table 50, the antenna module 32 of wireless module 30 mounted in the wireless module slot 13 is disposed remote from the table 50.

For example, in FIG. 4, a distance L between the center of wireless module slot 13 (i.e. the center of the wireless module 30 mounted in wireless module slot 13) and the back face 20 is about 11.5 mm. The thickness of the body 11, as measured from the input face 19 to back face 20, is about 18 mm. That is, the distance between the center of the wireless module slot 13 and the input face 19 is less than the distance L between the center of the wireless module slot 13 and the back face 20.

The input face 19 of the body 11 of portable information terminal 10 is provided with the display/table section 12 and button operation section 14. Through the input face 19, the operator inputs data or instructs execution of various processes that are executable by the portable information terminal 10. There is a case where the portable information terminal 10 is placed on the table 50 with its input face 19 situated upward and, in this state, coordinates are input by the stylus pen 18 through the display/tablet section 12 or the buttons on the button operation section 14 are operated. In this case, the portable information terminal 10 may execute radio communication using the wireless module 30. Even in such a case, according to the portable information terminal 10 of this embodiment, the antenna module 32 of wireless module 30 is remote from the table 50. Compared to a case where the antenna module 32 is situated close to the table 50, a degradation in radio wave
transmission/reception efficiency of the wireless module 30 can be suppressed.

As has been described above, according to the embodiment of the invention the wireless module slot 13 is located away from the back face 20. Thus, the antenna module 32 of wireless module 30 can transmit/receive radio waves at a position away from the table 50. The radio wave transmission/reception by the antenna module 32 is less affected by the table 50, and a degradation in radio wave transmission/reception efficiency of the wireless module 30 can be suppressed.

In the above description, the wireless module slot 13, along with the card slot 17, is provided at an upper end surface of the portable information terminal. Alternatively, they may be provided at a lower end surface or a left/right side surface of the portable information terminal 10, with a distance from the back face 20.

## Claims

1. A portable information terminal with a body (11) having a front face provided with an input section, and a back face (20) provided opposed to the front face,
**characterized by** comprising a wireless communication module slot (13) provided in the body (11) away from the back face (20) and permitting detachable mounting of a wireless communication module with a wireless communication function.

2. A portable information terminal according to claim 1, **characterized by** further comprising:
an IC card slot (17) provided near the back face (20) and between the wireless communication module slot (13) and the back face (20), and permitting detachable mounting of an IC card.

3. A portable information terminal according to claim 1, **characterized in that** the wireless communication module slot (13) is located at an upper end surface of the body.

4. A portable information terminal according to claim 2, **characterized in that** the wireless communication module slot (13) and the IC card slot (17) are located at an upper end surface of the body.

5. A portable information terminal according to claim 1, **characterized in that** the wireless communication module slot (13) permits detachable mounting of a wireless module having a casing whose physical shape is an IC card shape.

6. A portable information terminal according to claim 1, **characterized in that** said input section is a tablet (12) which inputs position information.
